# EUROPEAN PATENT APPLICATION

(11) **EP 4 776 242 A1**
(43) Date of publication of application: **15.07.2026**
(21) Application number: 25150614.3
(22) Date of filing: 08.01.2025
(51) Int. Cl.: G06V 10/82, G06V 20/52

(54) **METHOD AND SYSTEM FOR MONITORING AN ASSEMBLY PROCESS OF AT LEAST ONE COMPONENT TO BE ASSEMBLED INTO A DEVICE**

(71) Applicant: Ford Global Technologies, LLC, Dearborn, MI 48126 (US)
(72) Inventor: Garcia Collado, Beatriz, 46005 Valencia (ES)
(74) Representative: Markowitz, Markus

(57) **Abstract**

The disclosure generally relates to a method (80) and a system (10) for monitoring an assembly process of at least one component (12) to be assembled into a device (14). At least one video stream of the at least one component (12) to be assembled is recorded utilizing at least one vision sensor (20). The recorded at least one video stream is analyzed by an evaluation circuit (38) utilizing an artificial intelligence based on at least one artificial convolutional network (40) with regard to a designated mounting configuration (22) of the at least one component (12) to be assembled. A notification is output via a human machine interface (66) based on the analyzing performed by the evaluation circuit (38). The notification at least depends on an actual mounting configuration (24) of the at least one component (12) to be assembled and the designated mounting configuration (22) of the at least one component (12) to be assembled.

## Description

The disclosure generally relates to a method and a system for monitoring an assembly process of at least one component to be assembled into a device.

Within the course of designing and manufacturing new devices, such as new models of vehicles, the number of electrical connectors is steadily increasing. Prior art vision systems are not accurate enough or require complex patterns for being able to detect correct assembly configurations of such electrical connectors or other parts, such as bolts or the like, to be assembled within the respective devices. In particular, configurations in which the respective connectors or parts are in principle located at or within the intended receptacle but are not fully inserted therein, such as not fixed correctly (also known as "not fully home") are not detectable by known vision-based approaches. Another disadvantage of prior art vision systems is the requirement of a mandatory precise camera focus. This is the reason why such vision systems are error-prone in cases where the relative position between the camera and the part in question is variable. Moreover, current system can also not be used if the item to be inspected is hidden from the outside where the vision sensor is fixedly mounted at an exterior space of the device inside which the part in question is to be assembled. Especially, electrical connectors or other parts, such as bolts, are often located in positions which are difficult to access and to monitor from the exterior space.

However, such connectors or parts which are not correctly mounted lead to faulty configurations of the devices in which they are mounted. Therefore, the respective devices, such as vehicles, may be released from the manufacturing facility, though the device comprises inappropriately mounted parts. This leads to additional control operations and repairment tasks downstream of the actual manufacturing process which causes a reduction of the manufacturing efficiency.

US 2024/192145 A1 discloses a system which includes a station information system, a portable vision system, and a quality monitoring system. The station information system includes a station computing device configured to provide a notification related to a manufacturing operation performed on a component. The portable vision system includes a quality check module configured to include a station task module configured to execute a quality check task based on an image. The quality monitoring system includes a quality monitoring computing device configured to request the portable vision system to execute the quality check task based on a trigger message from the station information system and to provide a task data message related to the quality check task executed by the portable vision system to the station information system. The station computing device is configured to provide the notification based on the task data message from quality monitoring system via the user interface device.

US 2022/0066435 A1 discloses a means for determining an error that occurs during performance of an industrial process based on a degree of particle scatter present in a video stream captured by a camera.

KR 2022 0076792 A discloses a means for an operator to recognize abnormal fastening of a connector in an automobile production line in real-time based on a real-time determination which utilizes an audio detection mechanism for recording a fastening sound of the connector.

KR 10-1665644 B1 discloses a vehicle wiring harness connector terminal inspection system and method that determines a terminal state of one or more connectors based on an analysis of an acquired terminal image of the one or more connectors obtained from an acquiring unit. Images are acquired by means of cameras attached to robot structures, such as robot arms.

US 2022/0382262 A1 discloses a means for detecting a plurality of defects on the surface of a vehicle based on an analysis of a plurality of captured images associated with the vehicle obtained by an image capture device as the vehicle traverses a vehicle assembly line. A camera is fixedly mounted in view of the assembly line.

KR 10-2112809 B1 discloses a means for determining whether a vehicle connector component is properly seated to a coupling unit based on an artificial neural network that is configured to analyze whether status information of a novel connector part for the vehicle is defective and further based on one or more images used to analyze a housing of the vehicle connector and determine whether a plurality of connectors is defective. Images of the connectors are acquired during the manufacturing process of the connectors and used later for assessing whether a connector is assembled appropriately.

US 2022/0136872 A1 discloses an inspection apparatus that includes a portable vision data system, a user interface system, a wireless communication system, and a controller. The controller may incorporate AI frameworks for performing inspections such as a vision inspection of components being assembled.

CN 215897828 U discloses a camera having edge computing capabilities. The device is configured to include a touch screen, a camera module, an integrated mainboard with AI framework to receive images or video and send images or video for identification processing through a neural network model. The result of the identification is sent to touch screen.

Accordingly, while some of these prior art approaches utilize fixedly positioned vision sensors, others make use of portable vision sensors. Some approaches even utilize artificial intelligence-based architectures. However, the operational expenses for operating the underlying evaluation architectures are high. Put differently, the operational efficiency of the evaluation architectures is low. Hence, there is a need for a method and a system for monitoring an assembly process of at least one component to be assembled into a device which are more efficient than prior art approaches.

The subject matter of the independent claims satisfies the respective need. Further embodiments are indicated within the dependent claims and the following description, each of which, individually or in combination, may represent aspects of the disclosure.

A summary of certain embodiments disclosed herein is set forth below. It should be understood that these aspects are presented merely to provide a brief summary of these embodiments and that these aspects are not intended to limit the scope of this disclosure. This disclosure may encompass a variety of aspects that may not be set forth below. Some aspects are explained in view of methods, others in view of systems. However, the respective aspects are to be correspondingly transferred from methods to systems and vice versa.

According to an aspect, embodiments of the disclosure relate to a method for monitoring an assembly process of at least one component to be assembled into a device. The method comprises at least the steps of:
- At least one video stream of the at least one component to be assembled is recorded utilizing at least one vision sensor.
- The recorded at least one video stream is analyzed by an evaluation circuit utilizing an artificial intelligence based on at least one artificial convolutional network with regard to a designated mounting configuration of the at least one component to be assembled.
- A notification is output via a human machine interface based on the analyzing performed by the evaluation circuit. The notification at least depends on an actual mounting configuration of the at least one component to be assembled and the designated mounting configuration of the at least one component to be assembled.

The method is based on the finding that an artificial convolutional network can be employed to reduce the computational expenses required for determining as to whether an actual mounting configuration of a component to be assembled coincides with a designated mounting configuration. The key ingredient is the convolutional network which is able to extract predetermined features out of the at least one video stream such that the processing of the video stream and the determination as to whether the designated mounting configuration is met is enabled more efficiently as compared to prior art approaches utilizing other evaluation architectures or common artificial neural networks. Accordingly, the assembly process can be evaluated with an enhanced precision while simultaneously the computational expenses are reduced. Hence the rate of false-positive events i.e. of assembly procedures were assembled components are either inappropriately mounted while they are indeed correctly mounted or are identified as being correctly mounted while they are indeed inappropriately mounted can be reduced as compared to prior art approaches. This enables to enhance the rate of devices being assessed so as to be appropriately assembled such that the rate of defective devices leaving the manufacturing site can be reduced or even minimized. Thereby, the effort for post-manufacturing analyzes and post-manufacturing repairment work can be reduced. Hence, the overall production efficiency of the devices into which the components are assembled is enhanced as compared to prior art approaches. Advantageously, a respective notification is output via a human machine interface (HMI) so as to inform a user or operator accordingly.

In addition, the method does not rely on specific parameters of the video stream which is recorded. For example, the evaluation circuit utilizing the artificial intelligence based on the artificial convolutional network can even be designed to evaluate video data which are imperfectly recorded, such as having a focal point not coinciding with the distance between the vision sensor and the component to be assembled. Moreover, the method does not rely on fixedly mounted vision sensors. Accordingly, vision sensors can be employed which enable to record the vehicle stream also in view of components and parts to be assembled which are hidden from an exterior space of the device into which the components are to be assembled.

According to another aspect, embodiments of the disclosure relate to a system for monitoring an assembly process of at least one component to be assembled into a device. The system comprises at least one vision sensor, an evaluation circuit utilizing an artificial intelligence based on at least one artificial convolutional network, and a human machine interface. The at least one vision sensor is configured to record at least one video stream of the at least one component to be assembled. The evaluation circuit utilizing the artificial intelligence based on the at least one artificial convolutional network is configured to analyze the recorded at least one video stream with regard to a designated mounting configuration of the at least one component to be assembled. The system is configured to output a notification via the human machine interface based on the evaluation circuit. The notification at least depends on an actual mounting configuration of the at least one component to be assembled and the designated mounting configuration of the at least one component to be assembled.

The advantages reached by the method described herein are also achieved by the system in a corresponding manner.

Optionally the analysis of the recorded at least one video stream executed by the evaluation circuit is performed in real time and/or at least partially simultaneous to the recording of the at least one video stream performed by the at least one vision sensor. Put differently, the steps of recording the at least one video stream and of analyzing the recorded at least one video stream may be performed in parallel to each other and at least partially overlapping to each other in time. Therefore, notifications can be determined in real time and outputted via the human machine interface based on the analysis. Hence, a user is notified immediately of the respective results of the analysis.

Preferably, also the step of outputting the notification can at least partially be performed timely overlapping with the recording of the at least one video stream. In other words, also the outputting of the notification may be executed in real time.

In an alternative, the analysis of the recorded at least one video stream executed by the evaluation circuit is performed only subsequently after the recording of the at least one video stream performed by the at least one vision sensor. In this case, initially the video stream is recorded and afterwards the analysis is carried out. Therefore, the notification is outputted only after the video stream was recorded. This approach may for example be useful for training scenarios, where video streams which were recorded earlier, are analyzed at a wanted point in time such that a respective notification may then be outputted.

Preferably, also the step of outputting the notification can be executed only subsequent to the analysis. In this case, first the analysis is finished and based on the results, a respective notification is outputted.

In some examples, the device into which the components are assembled, may relate to a vehicle, such as a car or truck. With the ongoing development of new models of cars and trucks, the onboard electronics becomes more complex utilizing additional connectors. In addition, specific bolts or mounting components may be used to fix separate parts to each other. Such connectors and parts to be assembled are often mounted according to an intended mounting configuration, such as according to a specific mounting position. However, in some instances, an inappropriate mounting configuration may be caused as a snapping mechanism may not be appropriately met. For example, a snap tab may not be appropriately snapped into a corresponding snapping receptacle. Hence, there may be a chance that the component to be assembled gets loose again during use of the device into which the component is assembled. The method as described hereinbefore advantageously is usable to evaluate as to whether the designated mounting configuration is appropriately met during the assembly process of the components to be assembled.

Preferably, the component to be assembled may relate at least to a connector, a bolt, a spring, a part, a hose, or a cable. In fact, the components to be assembled may relate to any part, which is (fixedly or reversibly) mounted, preferably reversibly mounted, inside or at the underlying device. In this regard, assembling the component into the device is not limited to a mounting insight an interior space of the underlying device. Rather, also mounting procedures were the component to be assembled is attached to an exterior surface of the device are within the scope of the method. For example, certain parts are mounted at the undercarriage of the vehicle. Of course, the assembling of such components at this location may also be evaluated by utilizing the above-described method.

Optionally, the video stream may also relate to separate individual subsequent images which indicate an assembly process of the components to be assembled. Accordingly, the video stream is not limited to video data but may also relate to a collection of subsequently captured individual images recorded in view of the assembly process of the component to be assembled.

The designated mounting configuration may be regarded a mounting configuration which the component to be assembled is intended to be assembled according to for finalizing the assembly procedure. For example, the designated mounting configuration may relate to a specific mounting position, mounting orientation, or coupling with another component or part. Hence, the designated mounting configuration describes as to how the respective component is to be assembled into the underlying device. Obviously, after assembling the component to be assembled into the device, the actual mounting configuration can deviate from the designated mounting configuration if a mistake during the assembly process occurred. For example, an operator may exemplarily have connected a connector to a receptacle according to a false orientation. In a different example, a connector to be assembled may be insufficiently inserted into a receptacle such that a snapping mechanism is not fully closed. Several additional inappropriate mounting configurations can be contemplated which cause the actual mounting configuration to deviate from the designated mounting configuration. According to prior art approaches, such deviations are identified in post-manufacturing evaluation procedures which, however, cause high efforts. The herein described method enables to identify such inappropriate mounting procedures on-site (also called in-field) during the assembly process. The notification which is output enables an operator to immediately correct the inappropriate mounting configuration so that the actual mounting configuration of the component to be assembled is same with the designated mounting configuration. Accordingly, the production efficiency is strongly increased since post-manufacturing evaluation procedures can be omitted.

In some embodiments, the vision sensor is a mobile vision sensor, a wearable vision sensor, or a handheld vision sensor. For example, the mobile vision sensor may be attached to (wearable by) an operator who carries out the assembly process of the component to be assembled into the device, such as a body cam. Since the vision sensor is mobile, a video stream of the assembly process can be appropriately recorded even though the component to be assembled into the device is mounted inside an interior space thereof and, thus, may be hidden from an exterior space. Hence, reliable vision data can be recorded which enable to evaluate if the mounting procedure is carried out appropriately. If the vision sensor is wearable by the operator, the operator may still use his hands for the assembly process. For example, the vision sensor may be head-mounted or breast-mounted to enable recording of an appropriate video stream.

According to an aspect, each vision sensor may comprise a communication device configured for transferring data representing the recorded video stream to an external device, such as the evaluation circuit. In particular, the data representing the recorded view stream may be communicated in real-time. This means that the time delay caused by the communication procedure is so short that it is negligible. In an alternative, the data representing the recorded video stream may also be communicated to an external computer, such as an edge-PC which comprises the evaluation circuit.

Preferably, the communication device of the vision sensor is enabled for wireless communication. A wireless communication protocol may be employed in this regard, such as Bluetooth, NFC (near field communication), or Wi-Fi, RFID (radio frequency identification), or any other appropriate wireless communication technique.

In an alternative, the communication protocol may also relate to a wired communication standard, such as Ethernet or an Industrial Bus protocol.

In some instances, the recorded video stream is analyzed in real-time. That means that especially the evaluation circuit utilizing the artificial intelligence based on the artificial convolutional network is configured to evaluate the respective video stream in real-time. Accordingly, the notification can be output in real-time, for example, for a user or an operator performing the assembly process. Hence, and inappropriately carried out mounting procedure of a component can be corrected on-site such that the actual mounting configuration meets the designated mounting configuration.

In some embodiments, the method further comprises the initial steps of:
- A vehicle identification number is received.
- All components to be assembled are read out from a data storage device based on the received vehicle identification number.

Video streams of all components to be assembled are recorded utilizing the at least one vision sensor attached to the operator. The recorded video streams are analyzed by the evaluation circuit utilizing the artificial intelligence based on at least one artificial convolutional network with regard to designated mounting configurations of all components to be assembled. A notification is output via a human machine interface based on the analyzing performed by the evaluation circuit for all components to be assembled.

Put differently, the steps of receiving a vehicle identification number and reading out all components to be assembled are performed prior to the step of recording the video stream. This means that the method can be extended to the evaluation, in particular the simultaneous evaluation, of multiple components to be assembled into the device. In this regard, the assignment of the vehicle identification number and the respective components to be assembled into the device is made use of since it specifies, which components are of interest. For example, the vehicle identification number may be received when the underlying vehicle body (chassis) enters a specific assembly line for which the present method and system are employed. Accordingly, the data storage device may specify which components are to be assembled into the device, here a vehicle, having the respective vehicle identification number, along this assembly line and for which the evaluation of inappropriate mounting is to be carried out. In particular, a control device coupled to the evaluation circuit or the evaluation circuit itself may receive the respective identification number and may read out the components from the data storage device. Hence, the assembly procedures performed along a specific assembly line can be specified within the data storage device which subsequently can be used to carry out the method as described herein before. In some instances, the vehicle identification number may relate to a chassis number.

In some examples, the data storage device may also comprise different collections of vehicle identification numbers and respective components to be assembled into a respective device for different assembly lines or manufacturing sites. This provides the possibility to make use of a distributed data storage device, such as a server device, which is accessed by the respective control device or the evaluation circuit.

In some implementations, the data storage device comprises at least one web-enabled database of components to be assembled and associated vehicle identification numbers. Additional components to be assembled and associated vehicle identification numbers are addable to the database through a user interface. Accordingly, the database can be efficiently extended and new information of additional components to be assembled can be added. For example, the database can also comprise information with regard to different manufacturing sites or assembly lines. Put differently, in view of different manufacturing sites or assembly lines, different groups of vehicle identification numbers and components to be assembled can be contained within the database. Hence, an overall database can be set up which is accessible through the Internet and, thus, efficiently manageable. It also provides the possibility to adapt the method in view of new components to be assembled into the device if the device design is updated or modified.

The user interface may for example relate to a web-enabled interface which is accessible through Internet communication protocols. For example, the user interface may relate to a website.

In some instances, the evaluation circuit may also be configured to request vehicle identification numbers from a manufacturing site or assembly line. In this regard, the evaluation circuit may comprise or may be coupled to a communication device which transmits the respective request to a control device of the manufacturing site or assembly line. Once, a new vehicle identification number is received, the method is carried out with regard to the newly received vehicle identification number.

According to an embodiment, once the vehicle identification number is received and the respective components to be assembled are read out from the data storage device, the remaining steps of the method are executed simultaneously with the start of the assembly process. The progress of the method may then optionally be provided, for example through a user notification, to the operator who assembles the respective components into the device. Hence, the operator is informed of the current status of the method.

According to some examples, the method further comprises the step of:
- interrupting an assembly process of the at least one component to be assembled into the device if the actual mounting configuration of the at least one component to be assembled does not correspond to the designated mounting configuration of the at least one component to be assembled.

This provides the possibility, to interrupt an assembly process if the actual mounting configuration is not same with the designated mounting configuration. To interrupt the assembly process, in some examples, an assembly line may be interrupted. For example, the assembly line may comprise a conveyor mechanism or a different transport mechanism for transporting the devices into which the components are assembled from an entry to an exit. This conveyor mechanism or the corresponding transport mechanism may be interrupted until the fault mounting configuration of the component is adapted so as to correspond to the designated mounting configuration. Hence, the deviation between the actual mounting configuration of the designated mounting configuration is corrected on-site, and optionally in real-time, without the additional need for post-manufacturing evaluation procedures. This also provides the advantageous effect that the operator who assembled the component into the device is notified of the inappropriate assembly procedure and is made aware of the actions which are required to meet the designated mounting configuration.

Preferably, for all components to be assembled within the respective device, the evaluation circuit may need to determine that the actual mounting configuration corresponds to the designated mounting configuration at the end of the assembly process for the device, optionally the vehicle, to release the device from the manufacturing site or assembly line. If any deviation between the actual mounting configuration and the designated mounting configuration of the components to be assembled is determined to be present, the assembly procedure and/or the release of the device from the manufacturing site or assembly line may be interrupted based on a control signal initiated by the evaluation circuit, as described before. Hence, the method guarantees that any event of releasing a device having an inappropriately assembled component is prevented.

Common artificial neural networks comprise neurons. The respective artificial neural networks comprise several layers which each comprise multiple neurons. Each neuron of a specific layer of the underlying artificial neural network is usually coupled to all neurons of the preceding and the subsequent layer (so called fully connected neurons). Each neuron is assigned a weight distribution which may be regarded a probability mapping as to how an input signal received by the neuron from a specific proceeding neuron is modified in view of forwarding the respective signal to a specific subsequent neuron. In some nomenclatures, the weight distribution may be represented by a vector specifying the weight distribution of the individual neuron connections.

In contrast to regular neurons of common artificial neural networks, in an embodiment, the artificial convolutional network may comprise at least one learnable kernel. A kernel differs from common neurons in that it is not coupled to all neurons of the preceding and the subsequent layer. Kernels of convolutional layers and networks are only partially connected. Accordingly, a specific kernel of a convolutional layer of the network is coupled to only part of the neurons or kernels of a preceding and a subsequent layer. Consequently, the computational expenses are reduced based on implementing the artificial convolutional network having kernels. However, the precision of the processing procedure employed by the artificial convolutional network remains high. This is achieved since kernels are capable of extracting specific features of the processed signals such that the modification caused by a kernel is precisely tailored in view of the extracted feature. As a result, each kernel is assigned a feature map (sometimes also called an activation map, and commonly expressed as a vector). The feature map describes the relation between the received input signals and provided output signals. Put differently, the feature map describes as to how exactly the input signal received by the kernel is convolved by the processing executed by the kernel. Thus, a kernel may be regarded a part of an artificial neural network which comprises a set of learnable weights and biases that are applied to the received input signal during a convolution operation.

Since the kernels of the artificial convolutional network are configured to extract specific features from the processed signals, here from processed video data such as video streams or images, also the requirement can be omitted that the recorded video stream has to mandatorily be recorded such that the focal point is met for all portions thereof. The disadvantages based on the extracted features may be recognizable by the artificial convolutional network even if the underlying recorded video stream is not recorded corresponding to the focal point of the video sensor. Hence, based on the artificial convolutional network the extracted features may enable a precise evaluation as to whether the designated mounting configuration is met although the relative distance between the vision sensor and the component to be assembled varies through the recorded video stream.

Preferably, the evaluation circuit utilizing the artificial intelligence based on the at least one artificial convolutional network is based on machine learning. Hence, the learnable kernel represents an architecture, for which the feature map, which describes the underlying kernel function, is adaptable. In particular, the feature map may be adaptable based on a training procedure or during regular operation in a self-adapting fashion. Accordingly, the artificial convolutional network utilizes machine learning.

According to an aspect, the artificial convolutional network may be part of an artificial neural network. While the artificial neural network may comprise classical neurons, which may be fully connected neurons as described hereinbefore, a part (or all) of the artificial neural network may be established by the artificial convolutional network. Therefore, the artificial network can be adapted according to the needs. For example, input layers and/or output layers of the artificial network may comprise fully connected layers having fully connected neurons instead of kernels. In this regard, the input layer receives an input signal provided to the artificial network, namely the recorded video stream and optionally information as to the components to be assembled. The output layer provides an output signal of the artificial network, namely an assessment as to whether the actual mounting configuration of the component to be assembled corresponds to the designated mounting configuration. Therefore, the input procedure of inputting respective signals into the artificial network and the extracting procedure of outputting respective signals from the artificial network may be simplified and may be designed according to known standards.

In some embodiments, the artificial network may comprise at least two hidden layers. In this regard, hidden layers may be contemplated layers which are arranged between an input layer and an output layer. By having at least two subsequent hidden layers, the artificial network is based on deep learning.

Deep learning enables a sophisticated processing routine employed by the artificial network in that multiple subsequent individual processing procedures are executed. The subsequent individual procedures collectively establish a common processing routine. The common processing routine results in a collective processing which as to the individual sub-procedures is based on a broader basis regarding potential influences, thereby enhancing the overall quality of the outcome.

Deep learning can be supervised, semi-supervised or unsupervised. In particular, unsupervised deep learning routines provide the possibility of further enhancing the operational efficiency required for optimizing the processing procedure.

According to an aspect, the evaluation circuit utilizing the artificial intelligence based on the at least one artificial convolutional network comprises at least one object detection algorithm. The object detection algorithm may in particular relate to a YOLOv5 algorithm. The evaluation circuit utilizing the artificial intelligence based on the at least one artificial convolutional network analyzes the recorded video stream based on the object detection algorithm for identifying and monitoring the at least one component to be assembled within the recorded video stream. The object detection algorithm enables to monitor the component to be assembled within the video stream provided to the evaluation circuit such that a precise conclusion can be drawn as to whether the actual mounting configuration corresponds to the designated mounting configuration. In particular, the YOLOv5 algorithm has been proven to be able to precisely identify respective features of objects within video data. Moreover, the object detection algorithm, such as the YOLOv5 algorithm, may be able to analyze the recorded video stream in real-time, such as with negligible time delay.

In some instances, the object detection algorithm may be designed to be trainable by means of supervised machine learning. Put differently, a set of training images may be provided to the object detection algorithm in order to adapt itself to efficiently monitor components within the provided video data. In this regard, it may be necessary that a component to be monitored by the object detection algorithm is marked within at least the part of the training data provided to the algorithm, for example by a bounding box. Generally, the training data may relate to individual images or a view stream. For example, the component to be monitored may be marked in an initial image of a set of training images or in an initial image of a video stream. Based on the particularities of the marked object, the algorithm may then be able to identify and monitor for the respective object throughout the entire training data.

In some embodiments, the evaluation circuit utilizing the artificial intelligence based on at least one artificial convolutional network is trainable through a training interface based on a training dataset including at least one training video stream of at least one component to be assembled. The at least one component to be assembled is marked within at least a part of the training video stream. At least information of the designated mounting configuration of the at least one component to be assembled within the training video stream are assigned to the training video stream. Here, the training video stream is not limited to an actual video stream representing a film. Rather, the training video stream may also be a set of individual training images which enable a monitoring of an assembly procedure of the component to be assembled into the device. Based on the training data, the artificial convolutional network is provided with information as to which component is to be monitored within the training video stream. This is accomplished as the respective component is marked. For example, a frame may be drawn around the respective component within a part or an initial image of the training video stream.

The artificial convolutional network may accordingly monitor the components to be assembled during the assembly procedure and assess whether the actual mounting configuration corresponds to the designated mounting configuration for which the network received respective information. For control purposes, information as to the actual mounting configuration of the assembly procedure underlying the training video stream may also be provided to the artificial convolutional network.

Based on the comparison of the self-determined evaluation as to whether the actual mounting configuration corresponds to the designated mounting configuration with the control information, the intrinsic parameters of the artificial convolutional network may be self-adapted to enhance the precision of the evaluation procedure for subsequent training events and for regular operation.

Put differently, according to an example, a training video stream is provided to the artificial convolutional network. Within the training video stream, such as within an initial image thereof, a component to be assembled is marked. The artificial convolutional network then monitors the component being assembled during the training video stream. In particular, the artificial convolutional network assesses whether the actual mounting configuration coincides with the designated mounting configuration, for which information was provided to the network. In conclusion, the artificial convolutional network will decide as to whether the self-determined actual mounting configuration of the component to be assembled corresponds to the designated mounting configuration. This result can be compared to control information which indicates as to whether a correspondence between the actual mounting configuration of the component to be assembled and the designated mounting configuration indeed is present for the assembly procedure represented by the training video stream.

If the result determined by means of the artificial convolutional network deviates from the control information, intrinsic parameters of the artificial convolutional network, such as the feature map of the kernels of the convolutional network may be self-adapted by the network itself. In this regard, the network employs machine learning or deep learning. This training procedure may be conducted unsupervised, semi-supervised or supervised. A supervised training procedure enables a faster convergence such that the training efficiency is enhanced.

Optionally, the training interface may be regarded an interface, through which training video streams may be provided for training of the artificial convolutional network. For example, the training interface may also be established by a webpage through which different users may access the artificial convolutional network to provide additional training datasets. Therefore, the training interface enables that new training datasets are provided, for example in view of additional components to be evaluated as to their mounting configuration. Moreover, the artificial convolutional network may also be employed for additional assembly procedures, such as assembly procedures performed at different manufacturing sites or assembly lines.

According to an aspect, the training interface splits the training video stream into separate individual training images and provides the separate individual training images to the evaluation circuit utilizing the artificial intelligence. For example, a video stream of 30 seconds may be separated into about a thousand subsequent training images, corresponding to 33 images per second. This high density allows the artificial convolutional network to precisely monitor the components to be assembled during the assembly procedure. Hence, the precision of the evaluation procedure as to whether the actual mounting configuration corresponds to the designated mounting configuration is enhanced.

Within the course of the training procedure, i.e. while providing the training data set, and adapting the intrinsic parameters of the artificial convolutional network, data augmentation and a fine-tuning algorithm may also be made use of. For example, the data underlying the training data set may be post-processed with data augmentation for adapting to the needs of the artificial convolutional network. Moreover, the training efficiency may be enhanced with the fine-tunning algorithm which combines supervised and non-supervised machine learning techniques. In some instances, a training operator may adapt specific parameters during the training procedure to speed-up convergence such that the time period required for training is reduced.

According to another aspect, the present disclosure also relates to a data processing device comprising means for carrying out the method as described hereinbefore as a computer-implemented method for monitoring an assembly process of at least one component to be assembled into a device as described hereinbefore. The advantages achieved in view of the before mentioned method are correspondingly achieved also in view of the data processing device.

According to another aspect, the present disclosure also relates to a computer program product comprising instructions which, when the program is executed by a computer, cause the computer to carry out the computer-implemented method for monitoring an assembly process of at least one component to be assembled into a device as described hereinbefore. The advantages achieved in view of the before mentioned computer-implemented method are correspondingly achieved also in view of the computer program product.

According to another aspect, the present disclosure also relates to a computer-readable storage medium comprising instructions which, when executed by a computer, cause the computer to carry out the computer-implemented method for monitoring an assembly process of at least one component to be assembled into a device as described hereinbefore. The advantages achieved in view of the before mentioned computer-implemented method are correspondingly achieved also in view of the computer-readable storage medium.

The forgoing aspects and further advantages of the claimed subject matter will become more readily appreciated as the same become better understood by reference to the following detailed description when taken in conjunction with the accompanying drawings. In the drawings,
- Fig. 1 is a schematical drawing of a system for monitoring an assembly process of at least one component to be assembled into a device according to an embodiment,
- Figs. 2A to 2C are schematical drawings of exemplary scenarios of actual mounting configurations versus designated mounting configurations within the course of the system, and
- Fig. 3 is a schematical drawing of a method for monitoring an assembly process of at least one component to be assembled into a device according to an embodiment.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed. Various modifications to the described embodiments will be readily apparent to those skilled in the art, and the general principles defined herein may be applied to other embodiments and applications without departing from the spirit and scope of the described embodiments. Thus, the described embodiments are not limited to the embodiments shown but are to be accorded the widest scope consistent with the principles and features disclosed herein.

All of the features disclosed hereinafter with respect to the example embodiments and/or the accompanying figures can alone or in any sub-combination be combined with features of the aspects of the present disclosure including features of preferred embodiments thereof, provided the resulting feature combination is reasonable to a person skilled in the art.

For the purposes of the present disclosure, the phrase "at least one of A, B, and C", for example, means (A), (B), (C), (A and B), (A and C), (B and C), or (A, B, and C), including all further possible combinations when greater than three elements are listed. In other words, the term "at least one of A and B" generally means "A and/or B", namely "A" alone, "B" alone or "A and B".

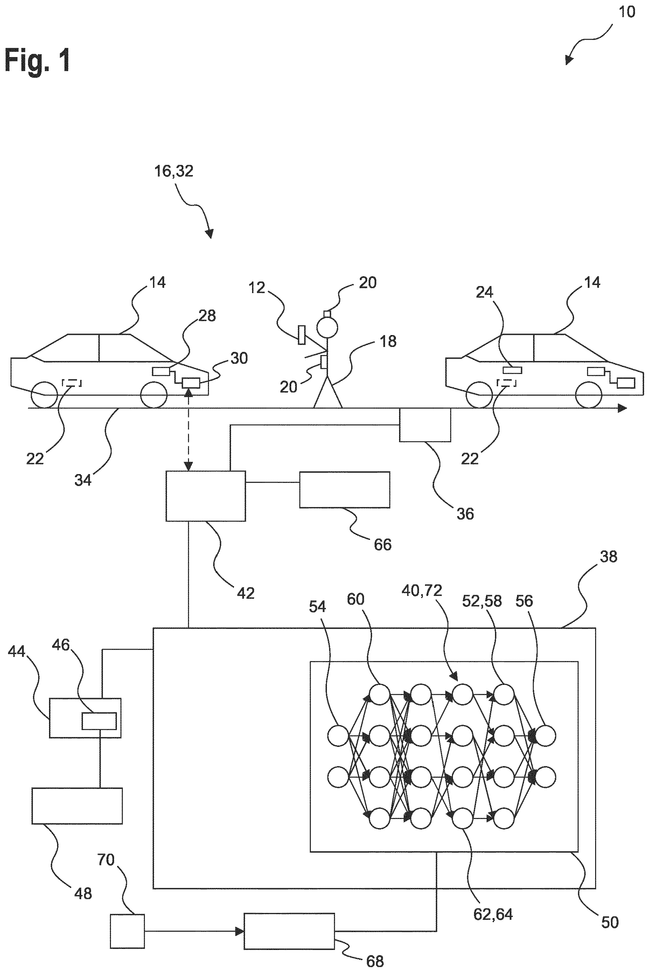

Fig. 1 is a schematical drawing of a system 10 for monitoring an assembly process of at least one component 12 to be assembled into a device 14 according to an embodiment.

Here, the device 14 into which the component 12 is to be assembled is a vehicle. The component 12 to be assembled may be a bolt, a connector, a hose, or a different part. The assembly procedure is performed at an assembly line 16 by an operator 18.

The operator 18 is equipped with vision sensors 20. A first vision sensor 20 is head-mounted and a second vision sensor 20 is breast-mounted. Put differently, the vision sensors 20 are wearable by the operator 18.

Each vision sensor 20 is configured to record a video stream of the assembly process of the component 12 into the device 14. Since the vision sensors 20 are worn by the operator 18, video streams may be recorded in view of several procedures even though the components 12 to be assembled into the device 14 are mounted in interior spaces of the device 14, which may not or may not be easily recognizable from an exterior space outside the device 14. Hence, wearing the vision sensors 20 by the operator 18 enables to record video streams which may be used to precisely monitor for the details of the assembly process.

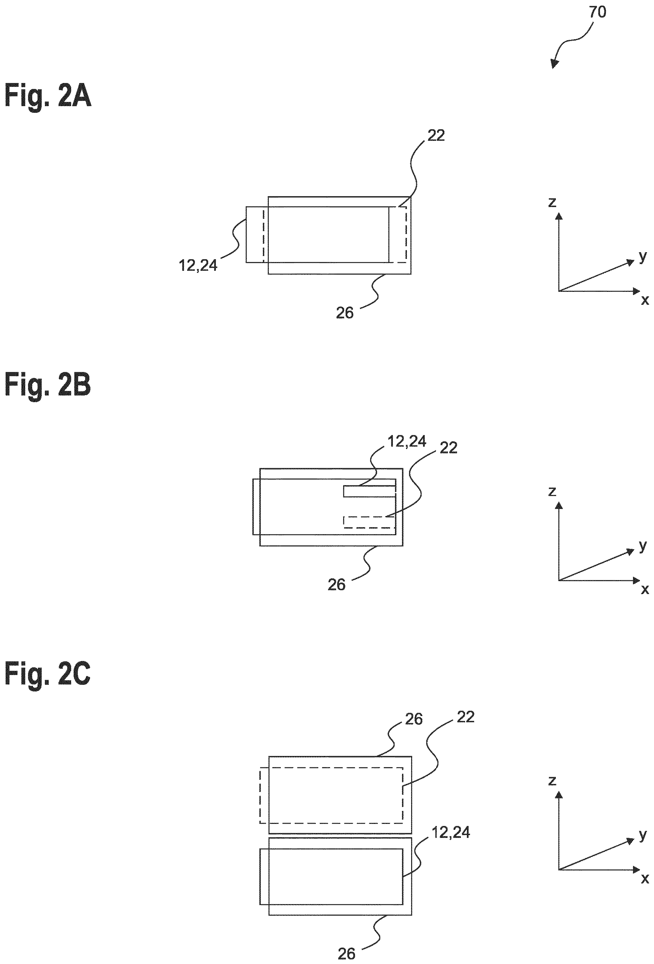

Generally, the component 12 is to be assembled into the device 14 according to a designated mounting configuration 22. Obviously, due to errors occurring during the assembly process, after an initial assembly of the component 12 into the device 14, the actual mounting configuration 24 may deviate from the designated mounting configuration 22. In this regard, Figs. 2A to 2C are schematical drawings of exemplary scenarios of actual mounting configurations 24 versus designated mounting configurations 22 as they may occur when using the system 10.

Usually, the component 12 to be assembled into the device 14 is to be coupled to another component, such as a receptacle 26 of the device 14. The difference between the actual mounting configuration 24 and the designated mounting configuration 22 may in most instances be characterized by displacements or false orientations according to a Cartesian coordinate system as indicated.

According to the scenario shown in Fig. 2A, the actual mounting configuration 24 differs from the designated mounting configurations 22 in that the component 12 is not assembled such that it is sufficiently inserted into the receptacle 26 into which it should be inserted according to the designated mounting configuration 22. Accordingly, the actual mounting configuration 24 of the component 12 differs from the designated mounting configuration 22 with regard to a displacement along the x-axis.

According to the exemplary scenario shown in Fig. 2B, the component 12 is inserted sufficiently into the receptacle 26 but the actual mounting configuration 24 corresponds to a fault orientation with regard to the designated mounting configuration 22. This means that the component 12 is inserted incorrectly into the receptacle 26.

A third exemplary scenario shown in Fig. 2C indicates that also a wrong coupling may be present. Whereas the component 12 to be assembled into the device 14 is in principle inserted correctly into a receptacle 26, the designated mounting configuration 22 indicates that the component 12 is inserted into the wrong receptacle 26.

Hence, due to errors happening during the assembly process, the actual mounting configuration 24 may differ from the designated mounting configuration 22.

The vision sensors 20 are configured to record video streams of the assembly process of the component 12 to be assembled into the device 14 in a manner, that the actual mounting configuration 24 may be distinguished from the designated mounting configuration 22.

According to the present embodiment, the device 14, which here is vehicle, comprises a control device 28 coupled to a communication device 30.

The assembly process is carried out at the assembly line 16 of a manufacturing site 32. The assembly line 16 comprises a conveyor mechanism 34 which is used to move the devices 14 along a given trajectory. To this end, a motor unit 36 is coupled with the conveyor mechanism 34.

For analyzing the video streams recorded by the vision sensors 20, the system 10 comprises an evaluation circuit 38 utilizing an artificial intelligence based on at least one artificial convolutional network 40. The evaluation circuit 38 may for example be part of an edge PC assigned to the assembly line 16.

According to the present embodiment, the evaluation circuit 38 is configured to communicate with the control device 28 of the device 14 into which the component 12 is to be assembled. To this end, the evaluation circuit 38 is coupled with the communication device 42 which is configured to communicate with the communication device 30 of the device 14. Via the communication between the communication device 30 of the device 14 and the communication device 42, for example, information, such as a vehicle identification number, of the device 14 may be exchanged in order to allow the system 10 to identify which device 14 is currently in the process along the assembly line 16.

Preferably, the communication between the communication device 42 and the communication device 30 of the device 14 is wireless, for example based on Wi-Fi.

Once the information regarding a specific identification of the device 14, which is in the process along the assembly line 16, is known to the evaluation circuit 38, the evaluation circuit 38 may also make use of a data storage device 44 comprising a database 46.

Within the database 46, specific datasets of vehicle identification numbers or other ID types allowing an exclusive identification of the device 14 under process are stored. Moreover, the database 46 also comprises information of the components 12 to be assembled into a specific device 14. In this regard, the respective components 12 to be assembled into a specific device 14 are assigned to the respective vehicle identification numbers or corresponding ID types. In addition, multiple different datasets can be included for different manufacturing sites 32 or different assembly lines 16.

According to the present embodiment, the data storage device 44 and the database 46 are web-enabled such that they are accessible through a user interface 48. For example, the user interface 48 may be established via a webpage through which access to the database 46 can be granted. The user interface 48 enables to add or modify specific datasets of the database 46 according to the needs. This allows to redefine or modify the components 12 to be assembled into the device 14 in view of a specific device 14, which may be identified within the database 46 by the corresponding vehicle identification number or corresponding ID type.

For analyzing the video streams recorded by the vision sensors 20, the artificial convolutional network 40 of the evaluation circuit 38 is applied. According to the present embodiment, the artificial convolutional network 40 as part of a more general artificial neural network 50. In this regard, the artificial neural network 50 comprises several layers 52, such as an input layer 54, an output layer 56, and hidden layers 58 between the input layer 54 and the output layer 56.

Optionally, the analysis of the recorded video streams can be performed by the evaluation circuit 38 in real time.

In an alternative, the analysis of the recorded video streams can be performed only after the respective video streams were recorded. In this case, the recorded video streams can be intermediately stored within the data storage device 44.

Each layer 52 of the artificial neural network 50 comprises at least one artificial neuron 60 or, in case of convolutional layers 62, a kernel 64.

In principle, the artificial neural network 50 receives an input signal which is provided to the input layer 54. The input signal is then modified based on the artificial neurons 60 and kernels 64 as will be described in more detail below. The output layer 56 is used to provide an output signal for further processing.

Whereas artificial neurons 60 are usually fully connected neurons in that they are coupled to each neuron 60 of a proceeding layer 52 and all neurons 60 of a subsequent layer 52, kernels 64 are only coupled to part of the neurons 60 or kernels 64 of the preceding and subsequent layer 52.

Each artificial neuron 60 is assigned a weight distribution which may be regarded a probability mapping as to how an input signal received by the respective artificial neuron 60 from a specific proceeding neuron 60 is modified in view of forwarding the respective signal to a specific subsequent neuron 60. In contrast to artificial neurons 60, kernels 64 of convolutional layers 62 and convolutional networks 40 are only partially connected. This is achieved since kernels 64 of the artificial convolutional network 40 extract specific features of the processed signals such that the modification caused by an artificial kernel 64 is precisely tailored in view of the extracted feature. Hence, the artificial convolutional network 40 having learnable kernels 64 allows to be tailored in view of the intended purpose of the evaluation circuit 38.

In principle, the convolutional network 40 having the learnable kernels 64 is configured to evaluate the video streams recorded by the vision sensors 20 in order to determine with regard to an actual mounting configuration 24 of a component 12 to be assembled into the device 14 in view of a respective designated mounting configuration 22. Put differently, based on the communication between the communication device 42 and the communication device 30 of the device 14, the evaluation circuit 38 may receive the respective vehicle identification number of the device 14. With this information, the evaluation circuit 38 may access the database 46 of the data storage device 44 and read out which components 12 are to be assembled into the device 14.

Moreover, the communication device 42 may also be configured to receive the video streams recorded from the vision sensors 20 which may communicate the respective video streams via wireless communication protocols, such as Wi-Fi, Bluetooth, NFC, RFID (radio frequency identification), or any other appropriate wireless communication technique. Accordingly, the artificial convolutional network 40 may evaluate whether the components 12 to be assembled into the device 14 are assembled therein such that their actual mounting configuration 24 corresponds to the designated mounting configuration 22 which was specified within the database 46. This evaluation procedure is carried out by the evaluation circuit 38 in real-time, hence, with negligible time delay in view of the assembly process. As an output signal, the evaluation circuit 38 indicates whether or not the actual mounting configuration 24 corresponds to the designated mounting configuration 22. Subsequently, the evaluation circuit 38 may initiate the output of a notification via a human machine interface 66 using the communication device 42 to inform the user of the system 10, or the operator 18 of the determined correspondence between the actual mounting configuration 24 and the designated mounting configuration 22.

For example, a corresponding notification output via the human machine interface 66 may indicate that the actual mounting configuration 24 does not correspond to the designated mounting configuration 22.

If the evaluation circuit 38 determines that the actual mounting configuration 24 does not correspond to the designated mounting configuration 22, the evaluation circuit 38 may in some embodiments also be configured to interrupt the assembly process of the device 14. In particular, the evaluation circuit 38 may be configured to prevent the device 14 from leaving the assembly line 16 if the determined actual mounting configuration 24 does not correspond to the designated mounting configuration 22. To this end, the evaluation circuit 38 may output a respective signal to the motor unit 36 such that the conveyor belt 34 is stopped. Accordingly, a movement of the device 14 is interrupted, until the actual mounting configuration 24 is corrected by an operator 18. Hence, errors occurring during the assembly process can be determined to be present in real-time and can be corrected on-site by operator 18. Thus, post-manufacturing evaluations outside the assembly line 16 can be prevented or at least reduced.

For training the artificial neural network 50, and especially the artificial convolutional network 40, the artificial neural network 50 is coupled to a training interface 68.

In some embodiments, the training interface 68 may be web-enabled. Via the training interface 68, training datasets 70 may be provided. The training dataset 70 may comprise training video streams of assembly processes of components 12 to be assembled into a device 14 and respective information of the designated mounting configurations of the respective components 12. In some instances, the training interface 68 may be configured to separate training video streams into individual training images, which allows that the underlying components to be assembled according to the training dataset 70 may be marked, such as by a bounding box. Based on the marking a user of the training dataset 70 provides the evaluation circuit 38 with sufficient information which component is to be evaluated within the training dataset 70. In an alternative, the component 12 to be assembled may also be marked by a user within part of the training video stream, such as within an initial image thereof.

The evaluation circuit 38 utilizing the artificial intelligence based on the artificial convolutional network 40 is based on machine learning. This means, that the evaluation circuit 38 is set up such that the weight distributions of the artificial neurons 60 and the learnable artificial kernels 64 may self-adapt their weight distributions and feature maps as to how a respective input signal is modified. This allows the training procedure using the training dataset 70 applied by the training interface 68 to be highly efficient. For example, for a first training run using a first training dataset 70, the evaluation circuit 38 may determine that the actual mounting configuration 24 corresponds to the designated mounting configuration 22, while they are indeed different from each other, which may be indicated within the training dataset 70 as a control information. To enhance the precision of the underlying determination procedure carried out by the evaluation circuit 38, for a subsequent training run, the weight distributions of the artificial neurons 60 and feature maps of the artificial kernels 64 may be adapted. As a consequence, the precision of the determination procedure as to whether the actual mounting configuration 24 corresponds the designated mounting configuration 22, may be enhanced for the subsequent training run. In this regard, the training can be executed unsupervised, semi-supervised, or supervised. Usually, for supervised training procedures, the time periods needed to reach convergence such that the determination procedure underlying the evaluation circuit 38 represents appropriate correspondence of differences, are shortest.

For monitoring and identifying the components 12 to be assembled into the device 14, the evaluation circuit 38 based on artificial intelligence may employ an object detection algorithm 72. Within the present embodiment, the object detection algorithm 72 may comprise a YOLOv5 algorithm. Since the component 12 to be assembled into the device 14 is marked within the training dataset 70, such as by a bounding box, the object detection algorithm 72 is enabled to monitor the respective component 12 during the training dataset 70 and the underlying assembly process. Therefore, the training procedure also leads to training of the object detection algorithm 72 which may then be used during regular operation of the evaluation circuit 38. This enables the evaluation circuit 38 to monitor the respective components 12 to be assembled into the device 14 within the video streams recorded by the vision sensors 20 during usual operation without the requirement of marking the components 12 within the video streams recorded. Put differently, based on the training procedure, the object detection algorithm 72 can autonomously monitor the components 12 within the respective video streams.

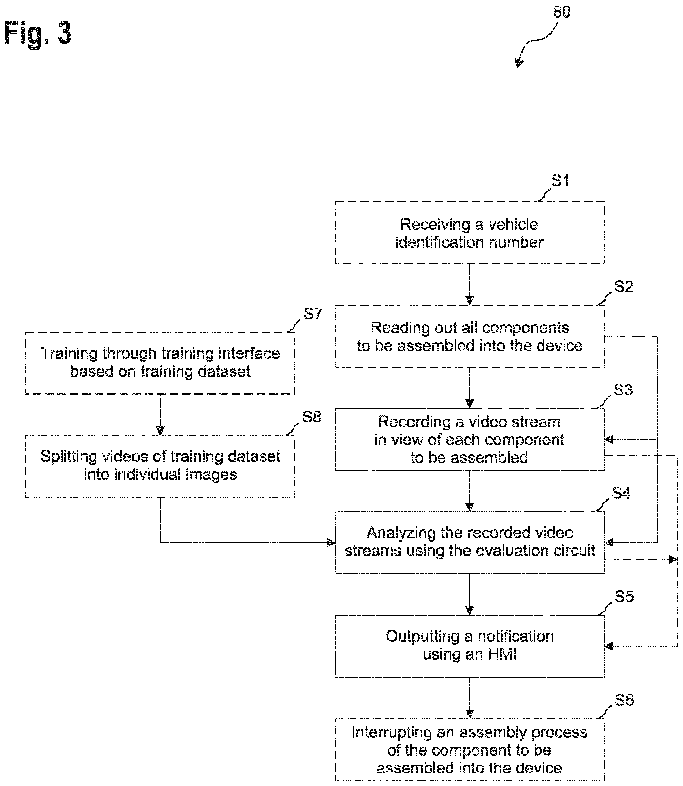

Fig. 3 is a schematical drawing of a method 80 for monitoring an assembly process of at least one component 12 to be assembled into a device 14 according to an embodiment. Optional steps are shown in dashed lines.

According to optional step S1 of the method 80, a vehicle identification number is received. In particular, the vehicle identification number may be received by the evaluation circuit 38. To this end, the evaluation circuit 38 may make use of the communication device 42, which may request the vehicle identification number from the device 14. In an alternative, device 14 may send the vehicle identification number once it enters the assembly line 16.

Subsequent to optional step S1, the method 80 may also comprise the optional step S2, according to which all components 12 to be assembled are read out from the data storage device 44 based on the received vehicle identification number, in particular by the evaluation circuit 38. Put differently, once it is known which exact device 14 is processed along the assembly line 16, the database 46 of the data storage device 44 can be used to evaluate which components 12 are to be assembled into the device 14. Since the database 46 comprises datasets where the respective components 12 to be assembled are assigned to the respective vehicle identification numbers, this provides the possibility for the evaluation circuit 38 to identify the components 12 which are to be evaluated.

According to step S3, a video stream of the component 12 to be assembled is recorded utilizing a vision sensor 20. If prior to step S3 the evaluation circuit 38 identified that multiple components 12 are to be assembled into the device 14, video streams are recorded in view of all components 12 to be assembled. Since the vision sensors 20 are mobile in that they are wearable by the operator 18, appropriate video streams may also be recorded even though the components 12 are to be assembled at volumes inside the device 14 hidden from an exterior space.

In this embodiment (solid lines), step S4 is performed subsequent to step S3. In step S4 of the method 80, the recorded video stream is analyzed by the evaluation circuit 38 utilizing the artificial intelligence based on the least one artificial convolutional network 40 with regard to a designated mounting configuration 22 of the component 12 to be assembled. In this regard, the evaluation circuit 38 makes use of the convolutional network 40 and its kernels 64 to determine the actual mounting configuration 24 of the components 12 which is assembled into the device 14 and compares the actual mounting configuration 24 to the designated mounting configuration 22. The information of the designated mounting configuration 22 is gained by reading out the respective information within step S2 from the data storage device 44.

Obviously, step S4 is carried out for all components 12 to be assembled into the device 14. This means that the evaluation circuit 38 analyzes the video streams recorded by the vision sensors 20 in view of all components 12 which are assembled into the device 14. For the analyzation of the assembly procedures, the evaluation circuit 38 makes use of the object detection algorithm 72. Thereby, the respective components 12 can be reliably monitored within the video streams recorded. Hence, at least the video streams recorded and the designated mounting configurations 22 are input signals to the artificial neural network 50. The output signal of the artificial neural network 50 indicates as to whether the actual mounting configuration 24 corresponds to the designated mounting configuration 22.

In an alternative indicated by dashed lines in Fig. 3, steps S3 and S4 are performed at least partially overlapping in time. In this case, the analysis executed by the evaluation circuit is carried out in real time. Therefore immediate results of the analysis are readily available such that respective notifications can be quickly achieved.

As a result of the analysis performed in step S4, the method 80 comprises according to the shown embodiment (solid lines) the subsequent step S5, according to which a notification is output via a human machine interface 66. The notification at least depends on an actual mounting configuration 24 of the component 12 to be assembled and the designated mounting configuration 22 of the component to be assembled. In particular, the notification may indicate whether the actual mounting configuration 24 corresponds to the designated mounting configuration 22. Moreover, the notification may also indicate any difference determined by the evaluation circuit 38 between the actual mounting configuration 24 and the designated mounting configuration 22. Therefore, the notification indicates whether the component 12 was assembled appropriately into the device 14. If this is not the case, the operator 18 is informed via the notification output by the human machine interface 66 which actions need to be taken such that the actual mounting configuration 24 corresponds to the designated mounting configuration 22.

Since the evaluation circuit 38 makes use of an artificial convolutional network 40, computational expenses are greatly reduced as compared to prior art approaches making use of common artificial neural networks 50. This is achieved since the artificial convolutional network 40 employs learnable kernels 64 which process respective input signals by respective feature maps. In particular, the computational expenses are reduced since the kernels 64 are only connected to part of the subsequent and preceding artificial neurons 60 or kernels 64. Therefore, fewer computational procedures have to be executed such that the efficiency of the evaluation of the assembly process of the component 12 is enhanced.

Based on the notification provided via the human machine interface 66, the operator 18 is directly informed if the assembly process of the components 12 was performed appropriately. Hence, it can be guaranteed that no devices 14 leave the assembly line 16 without all components 12 being assembled into the device 14 appropriately. Thus, post-manufacturing evaluation outside the assembly line 16 can be prevented.

Obviously, if multiple components 12 are to be assembled into the device 14, in step S5, a notification for each component 12 is output via the human machine interface 66 based on the respective correspondence between the actual mounting configuration 24 the designated mounting configuration 22.

In an alternative embodiment (dashed lines), step S5 may also be executed at least partially overlapping in time with steps S3 and/or S4. Therefore, the notifications are output even quicker.

Optionally, the method 80 may also comprise the step S6, where the evaluation circuit 38 may be configured to interrupt the assembly process of the component 12 to be assembled into the device 14 if the actual mounting configuration 24 of the component 12 to be assembled does not correspond to the designated mounting configuration 22 of the component 12 to be assembled. In this regard, the evaluation circuit 38 may output a respective signal causing the motor unit 36 to stop movement of the conveyor mechanism 34 such that the devices 14 are stopped in place without leaving the assembly line 16. Hence, it can be prevented, that any device 14 leaves the assembly line 16 without all components 12 being assembled appropriately into the device 14. Of course, alternative mechanisms to interrupt the movement of the devices 14 may also be contemplated. In essence, it can be prevented that devices 14 leave the manufacturing site 32 for which not all components 12 are assembled appropriately into the respective device 14.

Method 80 may also comprise the optional step S7, according to which the evaluation circuit 38 utilizing the artificial intelligence based on at least one artificial convolutional network 40 is trained through a training interface 68 based on a training dataset 70 including at least one training video stream of a component 12 to be assembled. In particular, during the training procedure it can make use of the machine learning capabilities of the evaluation circuit 38. Accordingly, the weight distribution of the artificial neurons 60 and the feature maps of the artificial kernels 64 can be self-adapted based on whether the provided training datasets 70 are evaluated appropriately by the artificial neural network 50 including the artificial convolutional network 40.

To this end, the component 12 to be assembled is marked within at least a part of the training video stream of the training dataset 70. In addition, at least information of the designated mounting configuration 22 of the component 12 to be assembled within the training video stream are assigned to the training video stream. Moreover, the training dataset 70 may also comprise information with regard to the correspondence of the actual mounting configuration 24 and the designated mounting configuration 22 of the assembled process underlying the respective training dataset 70.

According to the optional step S8, the training interface 68 splits the training video stream into separate individual training images and provides the separate individual training images to the evaluation circuit 38 utilizing the artificial intelligence. Therefore, the computational expenses are further reduced since evaluation of separate images may be easier than evaluation of actual video streams. Moreover, the separation into individual images provides the possibility to mark components 12 underlying the assembly process of the training dataset 70 within a particular image of the training dataset 70, such as within an initial image thereof.

The evaluation circuit 38, the vision sensors 20, or a separate device, such as a control device coupled to the evaluation circuit 38 may also be configured to separate the video streams recorded by the vision sensors 20 into separate images, such that the evaluation, which is carried out in step S4 of the method 80, may be executed in a fashion similar to the training procedure.

Certain embodiments disclosed herein, particularly the respective module(s) und/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

Although the disclosure has been illustrated and described with respect to one or more implementations, equivalent alterations and modifications will occur to others skilled in the art upon the reading and understanding of this specification and the annexed drawings. In addition, while a particular feature of the disclosure may have been disclosed with respect to only one of several implementations, such feature may be combined with one or more other features of the other implementations as may be desired and advantageous for any given or particular application.

## Claims

1. A method (80) for monitoring an assembly process of at least one component (12) to be assembled into a device (14), wherein the method (80) comprises the steps of:
- recording at least one video stream of the at least one component (12) to be assembled utilizing at least one vision sensor (20),
- analyzing the recorded at least one video stream by an evaluation circuit (38) utilizing an artificial intelligence based on at least one artificial convolutional network (40) with regard to a designated mounting configuration (22) of the at least one component (12) to be assembled, and
- outputting a notification via a human machine interface (66) based on the analyzing performed by the evaluation circuit (38), wherein the notification at least depends on an actual mounting configuration (24) of the at least one component (12) to be assembled and the designated mounting configuration (22) of the at least one component (12) to be assembled.

2. The method (80) of claim 1, wherein the method (80) further comprises the initial steps of:
- receiving a vehicle identification number, and
- reading out all components (12) to be assembled from a data storage device (44) based on the received vehicle identification number, wherein video streams of all components (12) to be assembled are recorded utilizing the at least one vision sensor (20) attached to the operator (18),
wherein the recorded video streams are analyzed by the evaluation circuit (38) utilizing the artificial intelligence based on at least one artificial convolutional network (40) with regard to designated mounting configurations (22) of all components (12) to be assembled, and wherein a notification is output via a human machine interface (66) based on the analyzing performed by the evaluation circuit (38) for all components (12) to be assembled.

3. The method (80) of claim 2, wherein the data storage device (44) comprises at least one web-enabled database (46) of components (12) to be assembled and associated vehicle identification numbers, and wherein additional components (12) to be assembled and associated vehicle identification numbers are addable to the database (46) through a user interface (48).

4. The method (80) of any one of the preceding claims, wherein the method (80) further comprises the step of:
- interrupting an assembly process of the at least one component (12) to be assembled into the device (14) if the actual mounting configuration (24) of the at least one component (12) to be assembled does not correspond to the designated mounting configuration (22) of the at least one component (12) to be assembled.

5. The method (80) of any one of the preceding claims, wherein the artificial convolutional network (40) has at least one kernel (64).

6. The method (80) of any one of the preceding claims, wherein the artificial convolutional network (40) is part of at least one artificial neural network (50).

7. The method (80) of any one of the preceding claims, wherein the evaluation circuit (38) utilizing the artificial intelligence based on the at least one artificial convolutional network (40) is based on machine learning.

8. The method (80) of any one of the preceding claims, wherein the evaluation circuit (38) utilizing the artificial intelligence based on the at least one artificial convolutional network (40) comprises at least one object detection algorithm (72), in particular a YOLOv5 algorithm, wherein the evaluation circuit (38) utilizing the artificial intelligence based on the at least one artificial convolutional network (40) analyzes the recorded video stream based on the object detection algorithm (72) for identifying and monitoring the at least one component (12) to be assembled within the recorded video stream.

9. The method (80) of any one of the preceding claims, wherein the at least one vision sensor (20) is wearable by an operator (18) assembling the at least one component (12) to be assembled into the device (14).

10. The method (80) of any one of the preceding claims, wherein the evaluation circuit (38) utilizing the artificial intelligence based on at least one artificial convolutional network (40) is trainable through a training interface (68) based on a training dataset (70) including at least one training video stream of at least one component (12) to be assembled, wherein the at least one component (12) to be assembled is marked within at least a part of the training video stream, and wherein at least information of the designated mounting configuration (22) of the at least one component (12) to be assembled within the training video stream are assigned to the training video stream.

11. The method (80) of claim 10, wherein the training interface (68) splits the training video stream into separate individual training images and provides the separate individual training images to the evaluation circuit (38) utilizing the artificial intelligence.

12. A system (10) for monitoring an assembly process of at least one component (12) to be assembled into a device (14), the system (10) comprising at least one vision sensor (20), an evaluation circuit (38) utilizing an artificial intelligence based on at least one artificial convolutional network (40), and a human machine interface (66),
wherein the at least one vision sensor (20) is configured to record at least one video stream of the at least one component (12) to be assembled,
wherein the evaluation circuit (38) utilizing the artificial intelligence based on the at least one artificial convolutional network (40) is configured to analyze the recorded at least one video stream with regard to a designated mounting configuration (22) of the at least one component (12) to be assembled, and wherein the system (10) is configured to output a notification via the human machine interface (66) based on the evaluation circuit (38), wherein the notification at least depends on an actual mounting configuration (24) of the at least one component (12) to be assembled and the designated mounting configuration (22) of the at least one component (12) to be assembled.

## Amended claims

### Amended claims in accordance with Rule 137(2) EPC.

1. A method (80) for monitoring an assembly process of at least one component (12) to be assembled into a device (14), wherein the method (80) comprises the steps of:
- recording at least one video stream of the at least one component (12) to be assembled utilizing at least one vision sensor (20),
- analyzing the recorded at least one video stream by an evaluation circuit (38) utilizing an artificial intelligence based on at least one artificial convolutional network (40) with regard to a designated mounting configuration (22) of the at least one component (12) to be assembled,
- outputting a notification via a human machine interface (66) based on the analyzing performed by the evaluation circuit (38), wherein the notification at least depends on an actual mounting configuration (24) of the at least one component (12) to be assembled and the designated mounting configuration (22) of the at least one component (12) to be assembled, and
wherein the method is **characterized in that** the at least one vision sensor (20) is a mobile vision sensor, a wearable vision sensor, or a handheld vision sensor.

2. The method (80) of claim 1, wherein the method (80) further comprises the initial steps of:
- receiving a vehicle identification number, and
- reading out all components (12) to be assembled from a data storage device (44) based on the received vehicle identification number, wherein video streams of all components (12) to be assembled are recorded utilizing the at least one vision sensor (20) attached to the operator (18),
wherein the recorded video streams are analyzed by the evaluation circuit (38) utilizing the artificial intelligence based on at least one artificial convolutional network (40) with regard to designated mounting configurations (22) of all components (12) to be assembled, and
wherein a notification is output via a human machine interface (66) based on the analyzing performed by the evaluation circuit (38) for all components (12) to be assembled.

3. The method (80) of claim 2, wherein the data storage device (44) comprises at least one web-enabled database (46) of components (12) to be assembled and associated vehicle identification numbers, and wherein additional components (12) to be assembled and associated vehicle identification numbers are addable to the database (46) through a user interface (48).

4. The method (80) of any one of the preceding claims, wherein the method (80) further comprises the step of:
- interrupting an assembly process of the at least one component (12) to be assembled into the device (14) if the actual mounting configuration (24) of the at least one component (12) to be assembled does not correspond to the designated mounting configuration (22) of the at least one component (12) to be assembled.

5. The method (80) of any one of the preceding claims, wherein the artificial convolutional network (40) has at least one kernel (64).

6. The method (80) of any one of the preceding claims, wherein the artificial convolutional network (40) is part of at least one artificial neural network (50).

7. The method (80) of any one of the preceding claims, wherein the evaluation circuit (38) utilizing the artificial intelligence based on the at least one artificial convolutional network (40) is based on machine learning.

8. The method (80) of any one of the preceding claims, wherein the evaluation circuit (38) utilizing the artificial intelligence based on the at least one artificial convolutional network (40) comprises at least one object detection algorithm (72), in particular a YOLOv5 algorithm, wherein the evaluation circuit (38) utilizing the artificial intelligence based on the at least one artificial convolutional network (40) analyzes the recorded video stream based on the object detection algorithm (72) for identifying and monitoring the at least one component (12) to be assembled within the recorded video stream.

9. The method (80) of any one of the preceding claims, wherein the at least one vision sensor (20) is wearable by an operator (18) assembling the at least one component (12) to be assembled into the device (14).

10. The method (80) of any one of the preceding claims, wherein the evaluation circuit (38) utilizing the artificial intelligence based on at least one artificial convolutional network (40) is trainable through a training interface (68) based on a training dataset (70) including at least one training video stream of at least one component (12) to be assembled, wherein the at least one component (12) to be assembled is marked within at least a part of the training video stream, and wherein at least information of the designated mounting configuration (22) of the at least one component (12) to be assembled within the training video stream are assigned to the training video stream.

11. The method (80) of claim 10, wherein the training interface (68) splits the training video stream into separate individual training images and provides the separate individual training images to the evaluation circuit (38) utilizing the artificial intelligence.

12. A system (10) for monitoring an assembly process of at least one component (12) to be assembled into a device (14), the system (10) comprising at least one vision sensor (20), an evaluation circuit (38) utilizing an artificial intelligence based on at least one artificial convolutional network (40), and a human machine interface (66),
wherein the at least one vision sensor (20) is configured to record at least one video stream of the at least one component (12) to be assembled,
wherein the evaluation circuit (38) utilizing the artificial intelligence based on the at least one artificial convolutional network (40) is configured to analyze the recorded at least one video stream with regard to a designated mounting configuration (22) of the at least one component (12) to be assembled,
wherein the system (10) is configured to output a notification via the human machine interface (66) based on the evaluation circuit (38), wherein the notification at least depends on an actual mounting configuration (24) of the at least one component (12) to be assembled and the designated mounting configuration (22) of the at least one component (12) to be assembled, and
wherein the system is **characterized in that** the at least one vision sensor (20) is a mobile vision sensor, a wearable vision sensor, or a handheld vision sensor.
